# FASCICULE DE BREVET EUROPEEN

(11) **EP 0 707 259 B1**
(45) Date de publication et mention de la délivrance du brevet: **22.08.2001**
(21) Numéro de dépôt: 95402274.5
(22) Date de dépôt: 11.10.1995
(51) Int. Cl.: G06F 3/033

(54) **Procédé et dispositif de commande à distance d'appareil de mesure**
Verfahren und Vorrichtung zur Fernsteuerung eines Messgeräts
Method and device for remote control of a measurement apparatus

(30) Priorité: 13.10.1994 FR 9412232
(43) Date de publication de la demande: 17.04.1996
(73) Titulaire: FRANCE TELECOM, 75015 Paris (FR)
(72) Inventeur: Foucault, Marc, F-22700 Louannec (FR); Herpeux, Jean-François, 22300 Ploulec'h (FR); Kemystetter, Jean-Luc, F-22780 Loguivy Plougras (FR)
(74) Mandataire: Fort, Jacques

(56) Documents cités:
- EP-A- 0 278 163
- WO-A-94/10625
- PATENT ABSTRACTS OF JAPAN vol. 16 no. 56 (P-1310) ,12 Février 1992 & JP-A-03 253961 (FUJI XEROX CO LTD) 13 Novembre 1991,
- EDN ELECTRICAL DESIGN NEWS, 1 Septembre 1988 NEWTON, MASSACHUSETTS US, pages 121-128, C.H.SMALL 'Virtual instruments'
- ELECTRONICS WORLD AND WIRELESS WORLD, Novembre 1992 SURREY GB, pages 901-904, 'LAB INSTRUMENTS-virtually redundant?'

## Description

L'invention concerne la commande à distance d'un appareil de mesure à partir d'un calculateur, et plus particulièrement les procédés et dispositifs destinés à permettre à un opérateur de provoquer, à partir d'un calculateur, une opération de mesure, d'en fixer les paramètres et de recueillir les résultats.

Classiquement, un appareil de mesure comporte un panneau, dénommé "face avant", portant des organes de commande manuelle (tels que des touches, des boutons poussoirs, des interrupteurs, des roues codeuses), des organes de visualisation (tels qu'un afficheur numérique ou graphique) et quelquefois des sorties de liaison avec des périphériques, telles qu'une imprimante.

Fréquemment, un tel appareil de mesure est équipé d'une interface de liaison série avec un ordinateur ou est prévu pour en être équipé. Une programmation appropriée de l'ordinateur et un logiciel interne à l'appareil de mesure permettent de commander l'appareil à l'aide du calculateur. Mais le mode de commande à partir du calculateur est très différent de l'exploitation directe ; le mode d'utilisation est peu convivial, exige que l'opérateur ait des connaissances en informatique ou ait fréquemment recours à une documentation ; il se prête mal à des mesures en temps réel et exige une adaptation du logiciel chaque fois que l'on souhaite ajouter des fonctionnalités.

On connaît par ailleurs (JP 3 243 961) un ordinateur permettant de commander un appareil électronique tel qu'une photocopieuse ou une imprimante. Le logiciel est prévu pour permettre d'ouvrir, sur l'écran de l'ordinateur, une fenêtre ayant un affichage similaire à un panneau de fonctionnement.

Le document EP 0 278 163 prévoit de commander un appareil de test à partir d'un calculateur. Le document WO 94 10625 montre un mode d'affichage du panneau avant d'un appareil situé à distance.

La présente invention vise notamment à fournir un procédé et un dispositif permettant de mettre en oeuvre le procédé ci-dessus défini, respectivement conformes aux revendications 1 et 4.

En général, l'organe de pointage sur l'écran sera constitué par une souris et l'organe à activer de l'appareil de mesure sera indiqué en cliquant la souris alors que la flèche est sur la représentation choisie.

Les moyens de l'appareil d'essai ou de mesure peuvent alors être commandés à partir du calculateur, de la même façon que par l'intermédiaire d'une liaison série, mais la représentation sur l'écran du calculateur et le mode de génération des ordres transmis sont modifiés.

Pour certaines commandes, par exemple celles effectuées sur la face avant à l'aide d'un élément rotatif ou d'un curseur, les icônes ou segments d'affichage ou pavés peuvent s'ajouter à la représentation des organes présents sur le panneau avant de l'appareil d'essai ou de mesure. C'est par exemple le cas des roues codeuses, qui peuvent être représentées sur l'écran accompagnées de pavés correspondant chacun à un sens de rotation de la roue codeuse.

Lorsque par exemple le calculateur est équipé d'une souris, un pas d'avance de la roue codeuse peut être provoqué par un cliquage sur la souris alors qu'elle désigne le pavé. Plusieurs pavés correspondant à des pas d'avance différents peuvent être prévus pour chaque sens.

On voit que l'invention permet à un technicien n'ayant pas de connaissances en informatique de commander et/ou de contrôler à distance un appareil de mesure en reproduisant pratiquement les opérations qu'il effectuerait s'il était en face de l'appareil lui même. La commande depuis le calculateur s'effectue de façon purement intuitive, par simple utilisation des indications qui apparaissent sur l'écran du calculateur.

L'invention apporte ainsi, dans la commande à distance d'appareils, des avantages comparables à ceux apportés par les systèmes d'interface graphique, tels que Windows dans l'exploitation des ordinateurs personnels du genre de l'IBM PC et à ceux apportés par des systèmes tels que Open Look ou X-Windows pour les machines fonctionnant sous le système d'exploitation Unix.

L'invention sera mieux comprise à la lecture de la description qui suit d'un mode particulier de réalisation, donné à titre d'exemple non-limitatif. Ce mode de réalisation concerne la télécommande d'un appareil de mesure constitué par un réflectomètre permettant notamment de déterminer la qualité d'épissures réalisées sur des fibres optiques. Cette télécommande s'effectue à l'aide d'un calculateur reliable au réflectomètre par l'intermédiaire du réseau téléphonique commuté. Unetelle application peut être considérée comme représentative, les opérations à effectuer par télécommande comprenant notamment le lancement d'une séquence de mesure, l'affichage du résultat de la mesure, le choix de paramètres de mesure et un réglage de sensibilité.

La description se réfère aux dessins qui l'accompagnent, dans lesquels :
- la figure 1 est un schéma des liaisons entre un appareil de mesure constitué par un réflectomètre et un calculateur de télécommande ;
- la figure 2 montre schématiquement la représentation qui apparaît sur l'écran du calculateur lors de l'initialisation d'une séquence de mesure ;
- la figure 3, similaire à la figure 2, montre un exemple de modification d'affichage, permettant d'augmenter la taille de la représentation de l'écran de l'appareil, sur l'écran du calculateur ;
- la figure 4, encore similaire à la figure 2, montre une possibilité de modification de la visualisation, permettant de disposer d'un tableau récapitulatif de plusieurs mesures effectuées ;
- les figures 5A et 5B, ensemble, constituent un organigramme d'un logiciel utilisable pour mettre en oeuvre le procédé suivant l'invention.

Comme cela a été indiqué plus haut, l'application dont il sera question maintenant est la télécommande d'un appareil de mesure 10 constitué par un réflectomètre relié à une boîte 12 d'où partent des fibres optiques 14 sur lesquelles un technicien doit effectuer des épissures et qui doivent ensuite être contrôlées. L'appareil de mesure 10, qui peut être par exemple un réflectomètre à laser du type commercialisé par la société Schlumberger Industries, permet de déterminer l'affaiblissement provoqué par une épissure 16 qu'un opérateur vient d'effectuer. La mise en oeuvre de l'invention permet au technicien de contrôler, sur le site 17 lui même, une épissure 16 qu'il vient d'effectuer, à condition de disposer d'une liaison téléphonique 22 avec l'emplacement de l'appareil de mesure 10.

Pour cela, le technicien utilise un calculateur 18 (ayant généralement une imprimante, non-représentée, permettant de conserver une trace du résultat), muni d'un modem 20 de liaison, par la ligne 22 du réseau commuté, à un modem correspondant 24 relié à l'appareil de mesure 10 par un boîtier 26 de conversion entre la norme IEEE et le protocole série RS 232. La liaison téléphonique pourrait être faite autrement que par le réseau commuté, par exemple sur un réseau de transmission par paquets ou sur une ligne numérique.

Le calculateur 18, généralement du genre ordinateur personnel, est aménagé pour permettre de reproduire, sur son écran 28, d'une part la face avant de l'appareil de mesure 10, comportant les moyens de commande et de visualisation de cet appareil, d'autre part des touches 40 d'accès direct aux principaux paramètres et fonctionnalités. Le calculateur 18 peut être aménagé pour mettre en oeuvre l'invention par programmation ou par adjonction d'une carte câblée. Le calculateur utilisera en général les possibilités déjà fournies par une interface graphique, telle que Windows.

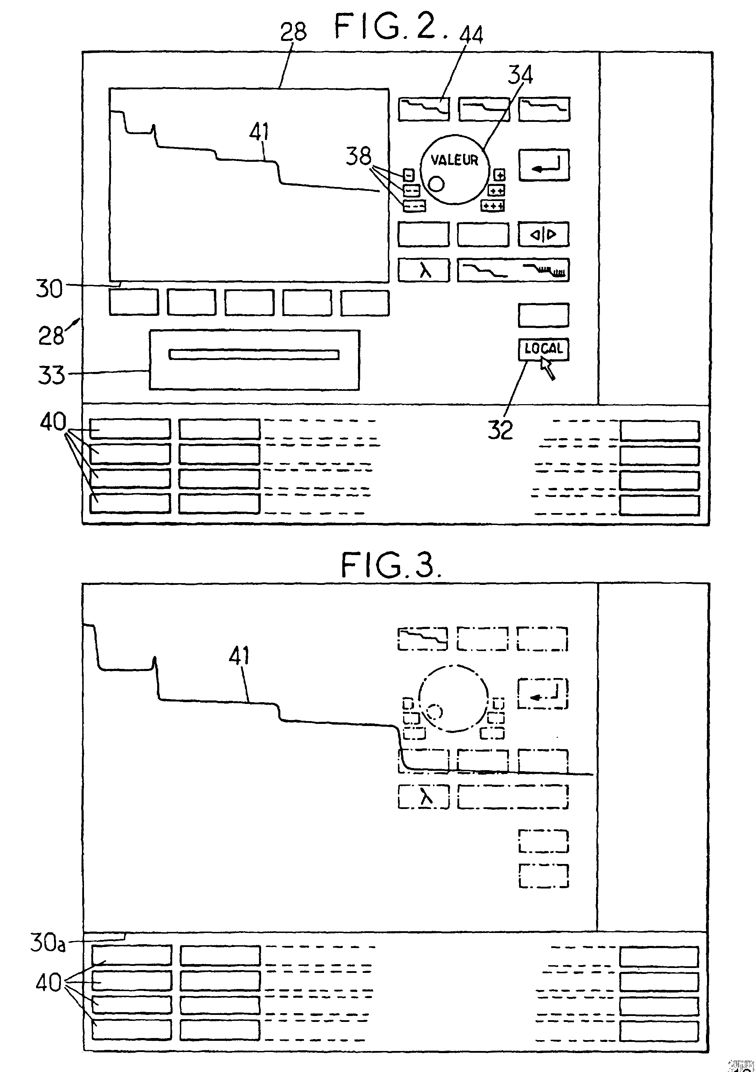

Dans le cas illustré sur la figure 2, la face avant de l'appareil est reproduite à la partie supérieure de l'écran 28 du calculateur. La plupart des organes sont reproduits à l'identique, de sorte que le technicien retrouve la présentation avec laquelle il est familiarisé. Il s'agit notamment, dans le cas illustré sur la figure 2 :
- d'un écran 30 de visualisation des résultats,
- d'une touche 32, dite "local", permettant de passer du mode local de commande de l'appareil 10 au mode télécommande, et réciproquement,
- de plusieurs touches de sélection, qui ne seront pas décrites en détail, car elles dépendent de l'application, ne sont pas liées à la mise en oeuvre de l'invention et servent à provoquer l'acquisition et la visualisation des mesures et des courbes,
- de l'entrée d'une unité de disquette 33.

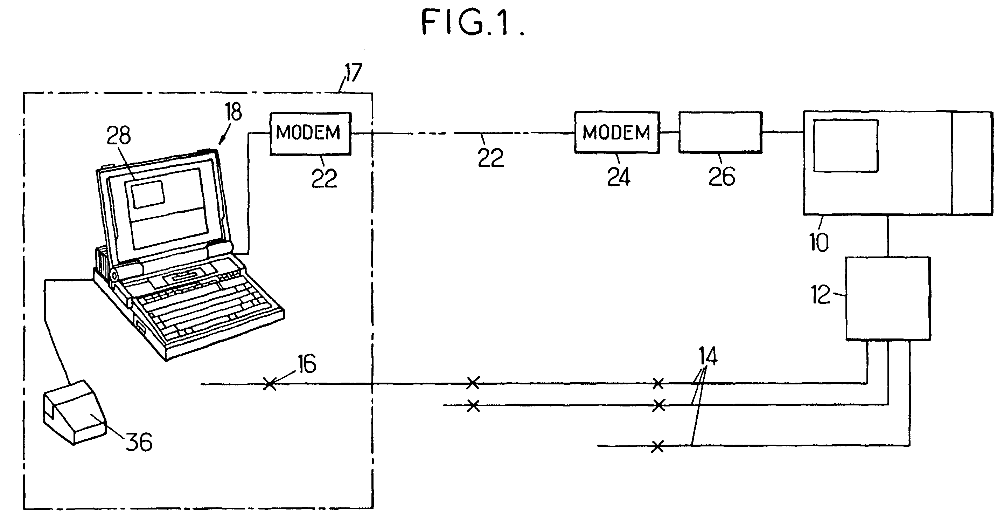

Pour certains organes, une représentation à l'identique ne permettrait pas une commande à l'aide d'une souris ou d'un crayon à lumière. C'est le cas d'une roue codeuse, telle que la roue 34. Pour simuler l'actionnement d'une telle roue codeuse à partir d'une souris 36 (figure 1), des pavés 38 sont représentés autour de la roue codeuse. Ils permettent de provoquer une commande identique à celle provoquée par la rotation physique de la roue codeuse de l'appareil en cliquant sur le pavé 38 approprié.

Les touches d'accès direct, telles que 40, ont une fonction qui dépend des fonctionnalités de l'appareil de mesure 10 et du mode de restitution des mesures. Certaines peuvent être prévues pour permettre de commander l'impression des résultats sur le site et permettre le choix du format d'impression. D'autres touches peuvent être prévues pour afficher des indications telles que la date, l'heure, et l'identification de la fibre sur lesquelles les mesures sont effectuées. Une touche, identifiée par "Commut.Fib", peut être prévue pour permettre la sélection de celle des fibres 14 qui sera contrôlée.

L'accès direct aux paramètres et fonctionnalités peut être également rendu accessible par des menus déroulants, de la même façon que sur l'appareil de mesure, à l'aide de commandes effectuées au clavier du calculateur.

Avec une telle disposition, la prise de contrôle peut par exemple s'effectuer en pointant la touche "local" 32 et en cliquant le bouton gauche de la souris. Les paramètres de chaque mesure peuvent être sélectionnés directement en cliquant sur les touches de fonction appropriées 40 en bas de l'écran 28. L'acquisition et la visualisation des courbes, telles que la courbe 41 montrée en figure 2, s'effectuent alors comme sur l'appareil 10 lui même.

D'autres fonctions peuvent également être prévues pour faciliter le travail du technicien, en utilisant encore les possibilités offertes par une souris ou en ajoutant la possibilité de réaliser un zoom sur l'écran 30.

A titre d'exemple, la figure 3 montre un doublement de la taille de la représentation 30a de l'écran de l'appareil, obtenu en cliquant le bouton gauche de la souris alors que cette dernière désigne l'écran 30. Il est dans le cas illustré possible de faire apparaître en surimpression les touches de fonction situées à droite de l'écran (comme indiqué en traits mixtes sur la figure 3) ou de les faire disparaître, en cliquant le bouton droit de la souris.

Le calculateur peut être adapté de façon à ajouter des fonctionnalités supplémentaires à celles disponibles sur l'appareil 10.

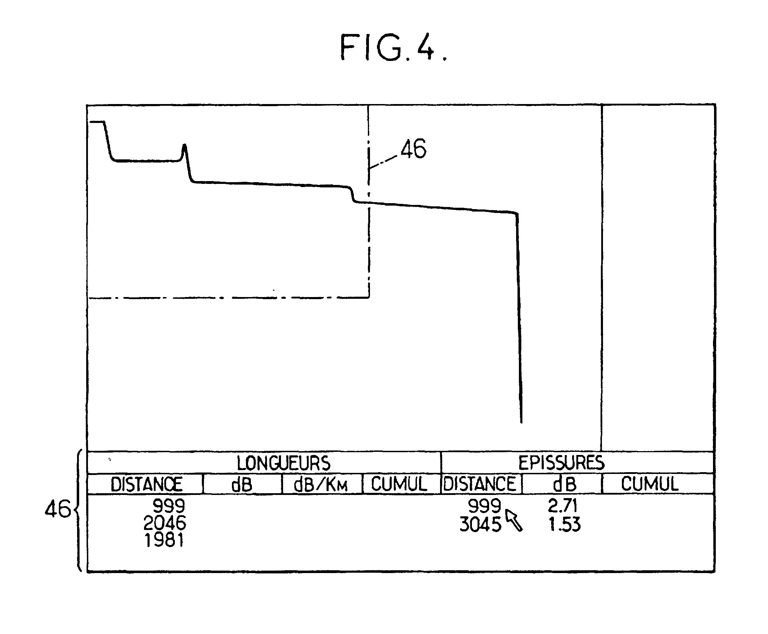

Par exemple, le calculateur peut être prévu pour que, en cliquant le bouton droit de la souris alors qu'elle désigne une touche particulière, telle que la touche 44 on obtienne, au lieu de la fonctionnalité habituelle associée à la touche, une autre fonctionnalité. Par exemple on peut faire apparaître un tableau récapitulatif des mesures, tel que le tableau montré en 46 sur la figure 4. Le calculateur peut être programmé, pour que, une fois le tableau affiché, on puisse, en cliquant sur l'un de ses éléments (comme montré en figure 4) provoquer un effet de zoom, étalant, sur l'ensemble de la surface disponible de l'écran, la partie de la représentation indiquée par la cadre 46 en tirets sur la figure 4.

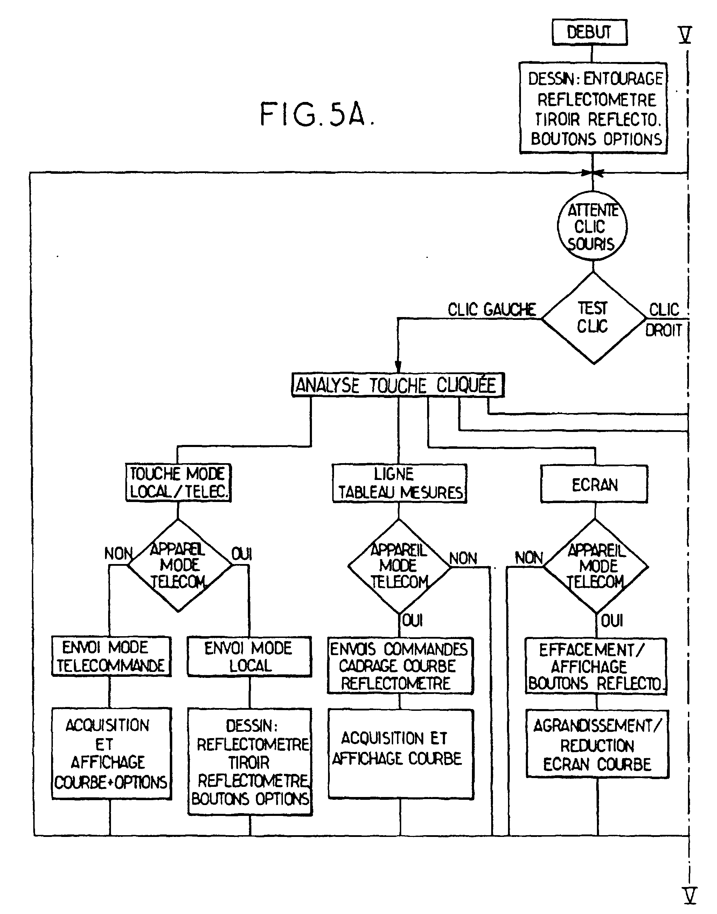

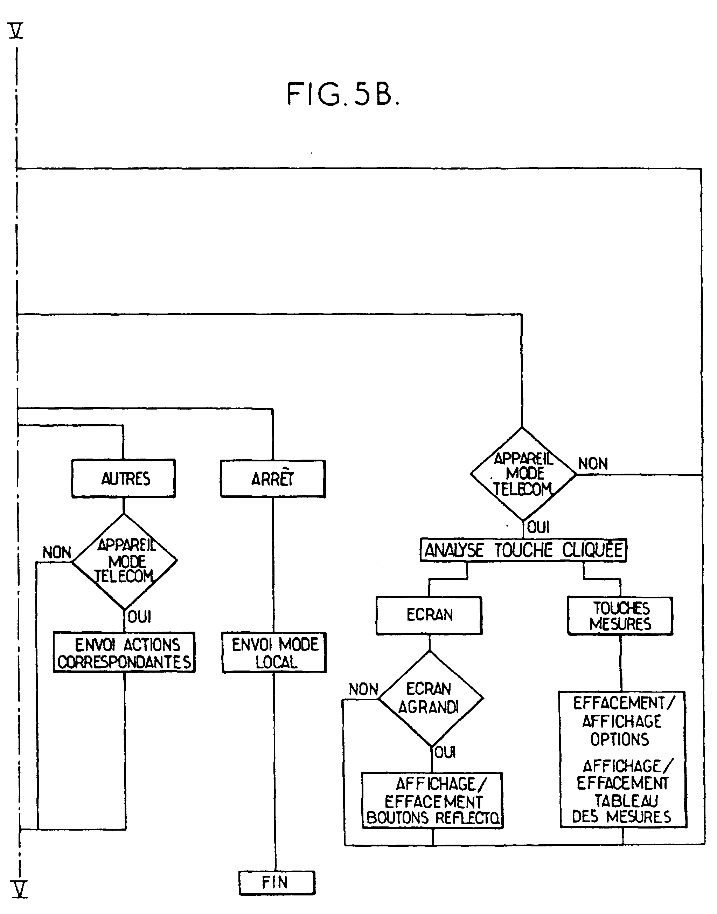

Les fonctions définies plus haut peuvent être obtenues par un logiciel correspondant à l'organigramme montré sur les figures 5A et 5B, qui se raccordent suivant la ligne V-V des deux figures.

Dès l'initialisation du programme, la représentation de la face avant du réflectomètre et celle des touches de fonction apparaissent sur l'écran 28 du calculateur qui se place en attente d'un cliquage sur la souris 36. Dans le cas particulier illustré, c'est le bouton gauche de la souris qui permet d'effectuer la majeure partie des sélections.

En cliquant le bouton gauche alors que la souris désigne la touche 32 "local", un test est effectué. Si l'appareil 10 est en mode télécommande, il passe en mode local, et inversement. Si la commande provoque le retour en mode local, la représentation de la face avant subsiste et le calculateur revient à l'état d'attente. Si l'appareil est amené en mode télécommande, il y a acquisition et affichage de la courbe donnant les résultats de mesure et des options.

Le cliquage sur l'écran 30 ou sur la ligne du tableau de mesure n'a aucun effet si l'appareil est en mode local. Si au contraire il est en mode télécommande, le cliquage sur la ligne du tableau de mesure provoque l'envoi des commandes de cadrage de la courbe de réflectométrie, puis l'acquisition et l'affichage de la courbe donnant les résultats de mesure.

Le cliquage sur la représentation 30 de l'écran de l'appareil, lorsque celui-ci est en mode télécommande et à grande échelle, provoque l'effacement ou l'affichage, suivant le cas, des boutons du réflectomètre, c'est-à-dire l'apparition et la disparition des symboles montrés en traits mixtes sur la figure 3 ainsi que l'agrandissement et la réduction de la représentation de l'écran.

Les effets des autres touches de fonction provoquent les actions respectives, lorsque l'appareil 10 est en mode télécommande.

Enfin, le cliquage sur la touche d'arrêt provoque le retour en mode local et la fin de la mesure à partir du calculateur.

Le cliquage du bouton droit provoque des effets similaires, correspondant à des fonctions différentes, comme indiqué sur la figure 5B.

## Revendications

1. Procédé de commande à distance, à partir d'un calculateur (18), d'un appareil d'essai ou de mesure (10) ayant des moyens activables et désactivables d'exécution de mesure et une face avant portant des touches ou boutons d'activation des moyens d'exécution, des moyens (30) de présentation visuelle des résultats et/ou des conditions de mesure et une interface (24) d'entrée/sortie compatible avec une liaison téléphonique, caractérisé en ce que :
- on reproduit par voie logicielle, sur l'écran (28) du calculateur muni d'un organe (36) de pointage sur l'écran (28) fourni à l'appareil par ladite liaison, l'aspect de ladite face avant, le calculateur étant prévu pour faire apparaître, à côté de certains desdits moyens d'activation, des icônes, segments d'affichage ou pavés permettant le réglage desdits moyens d'activation en les pointant ; et
- on transmet les informations de commande à partir du calculateur vers l'appareil de mesure par pointé de la représentation de la touche ou du bouton de l'icône, du segment ou du pavé respectif sur l'écran du calculateur.

2. Procédé selon la revendication 1, caractérisé en ce qu'on reproduit, sur l'écran du calculateur, la présentation visuelle des résultats de ladite face avant.

3. Procédé selon la revendication 1 ou 2, caractérisé en ce qu'on reproduit également, sur l'écran du calculateur, des touches de fonction supplémentaires.

4. Dispositif de commande à distance d'un appareil d'essai ou de mesure ayant des moyens activables et désactivables d'exécution de mesure, et, sur une face avant des moyens d'activation des moyens d'exécution, des moyens de présentation visuelle des résultats et/ou des conditions de mesure et une interface (24) d'entrée/sortie compatible avec une liaison téléphonique, ledit dispositif comprenant un calculateur (18), comportant un écran (28) et muni d'un modem (22), ayant un logiciel-système de commande par pointage de l'écran (28), programmé de façon à générer, sur son écran (28) de visualisation, une représentation de la face avant de l'appareil et à provoquer l'émission, par l'intermédiaire du modem, d'ordres de commande des organes de l'appareil désignés par pointage sur l'écran (28) du calculateur, le calculateur étant prévu pour faire apparaître, à côté de certains desdits moyens d'activation, des icônes, segments d'affichage ou pavés permettant le réglage desdits moyens d'activation en les pointant.

5. Dispositif selon la revendication 4, caractérisé en ce que les moyens d'activation constitués par des roues codeuses sont représentés accompagnés de pavés correspondant chacun à un sens de rotation de la roue codeuse et éventuellement chacun à un pas d'avance différent de la roue codeuse.

6. Dispositif selon la revendication 4 ou 5, caractérisé en ce que le calculateur est prévu pour faire apparaître sur son écran (28), en plus des moyens d'activation appartenant à la face avant de l'appareil, des touches (40) d'accès direct à des paramètres et fonctionnalités.

7. Dispositif selon l'une quelconque des revendications 4 à 6, caractérisé en ce que le calculateur est prévu pour faire apparaître, sur son écran, une touche de commutation entre un mode local de contrôle de l'appareil et un mode de télécommande, par pointage de la touche.

8. Dispositif selon l'une quelconque des revendications 4 à 7, caractérisé en ce que le calculateur est prévu pour la visualisation à volonté, sur son écran (28) de tout ou partie de l'écran de l'appareil à échelle augmentée.

9. Dispositif selon l'une quelconque des revendications 4 à 8, le calculateur comportant une souris de commande par pointage de l'écran, il est prévu pour fournir une fonctionnalité différente de la fonctionnalité habituelle associée à une touche pointée sur l'écran, en cliquant le bouton droit de la souris.

## Patentansprüche

1. Verfahren zur rechnergestützten (18) Fernsteuerung einer Prüf- oder Messvorrichtung (10) mit aktivierbaren und deaktivierbaren Mitteln zur Ausführung der Messung und einer Frontseite, welche Tasten oder Knöpfe zur Aktivierung der Ausführungsmittel trägt, Mitteln (30) zur visuellen Darstellung der Ergebnisse und/oder der Bedingungen der Messung und einer zu einer Telefonverbindung kompatiblen Eingangs-/Ausgangsschnittstelle (24), dadurch gekennzeichnet, dass
- auf dem Bildschirm (28) des Rechners, welcher mit einem Zeigerorgan (36) für den Bildschirm (28) ausgeführt ist, softwaregestützt das über die Verbindung an die Vorrichtung gelieferte Aussehen der Frontseite wiedergegeben wird, wobei der Rechner dazu eingerichtet ist, statt einiger der Aktivierungsmittel Symbole, Anzeigesegmente oder Kästchen aufscheinen zu lassen, welche die Bedienung der Aktivierungsmittel ermöglichen, indem auf sie gezeigt wird, und
- die Steuerinformationen vom Rechner zur Messvorrichtung übertragen werden, indem auf dem Bildschirm des Rechners auf die jeweilige Symbol-, Segment- oder Kästchendarstellung der Taste oder des Knopfs gezeigt wird.

2. Verfahren nach Anspruch 1, dadurch gekennzeichnet, dass auf dem Bildschirm des Rechners die visuelle Darstellung der Ergebnisse der Frontseite wiedergegeben wird.

3. Verfahren nach Anspruch 1 oder 2, dadurch gekennzeichnet, dass auf dem Bildschirm des Rechners außerdem zusätzliche Funktionstasten wiedergegeben werden.

4. Einrichtung zur Fernsteuerung einer Prüf- oder Messvorrichtung mit aktivierbaren und deaktivierbaren Mitteln zur Ausführung der Messung und an einer Frontseite Aktivierungsmitteln für die Ausführungsmittel, Mitteln zur visuellen Darstellung der Ergebnisse und/oder der Bedingungen der Messung und einer zu einer Telefonverbindung kompatiblen Eingangs-/Ausgangsschnittstelle (24), wobei die Einrichtung einen Rechner (18) umfasst, welcher einen Bildschirm (28) aufweist und mit einem Modem (22) versehen ist, wobei der Rechner (18) ein Softwaresystem zur Zeigersteuerung für den Bildschirm (28) aufweist und derart programmiert ist, dass auf seinem Anzeigeschirm (28) eine Darstellung der Frontseite der Vorrichtung erzeugt wird und über das Modem die Ausgabe von Befehlen zur Steuerung bestimmter Organe der Vorrichtung bewirkt wird, auf die auf dem Bildschirm (28) des Rechners gezeigt wird, wobei der Rechner dazu eingerichtet ist, statt einiger der Aktivierungsmittel Symbole, Anzeigesegmente oder Kästchen aufscheinen zu lassen, welche die Bedienung der Aktivierungsmittel ermöglichen, indem auf sie gezeigt wird.

5. Einrichtung nach Anspruch 4, dadurch gekennzeichnet, dass solche Aktivierungsmittel, die von Codierrädern gebildet sind, durch begleitende Kästchen dargestellt werden, weiche jeweils einer Drehrichtung des Codierrads und gegebenenfalls jeweils einem unterschiedlichen Weiterdrehungsschritt des Codierrads entsprechen.

6. Einrichtung nach Anspruch 4 oder 5, dadurch gekennzeichnet, dass der Rechner dazu eingerichtet ist, auf seinem Bildschirm (28) über die zur Frontseite der Vorrichtung gehörigen Aktivierungsmittel hinaus Tasten (40) zum direkten Zugriff auf Parameter und Funktionalitäten aufscheinen zu lassen.

7. Einrichtung nach einem der Ansprüche 4 bis 6, dadurch gekennzeichnet, dass der Rechner dazu eingerichtet ist, auf seinem Bildschirm eine Taste aufscheinen zu lassen, um durch Zeigen auf die Taste zwischen einem Modus zur lokalen Steuerung der Vorrichtung und einem Fernsteuermodus umzuschalten.

8. Einrichtung nach einem der Ansprüche 4 bis 7, dadurch gekennzeichnet, dass der Rechner dazu eingerichtet ist, auf seinem Bildschirm (28) wunschweise den gesamten Bildschirm der Vorrichtung oder einen Teil hiervon in vergrößertem Maßstab sichtbar zu machen.

9. Einrichtung nach einem der Ansprüche 4 bis 8, bei der der Rechner eine Maus zur Zeigersteuerung für den Bildschirm umfasst und dazu eingerichtet ist, durch Drücken auf die rechte Maustaste eine andere Funktionalität als die sonstige Funktionalität bereitzustellen, die einer auf dem Bildschirm gezeigten Taste zugeordnet ist.

## Claims

1. A method of remotely controlling, from a computer (18), a test or measuring apparatus (10) having activatable and deactivatable means for measurement execution and a front surface with keys or buttons for activation of the execution means, means (30) for visual display of the results and/or of the measurement conditions and an input/output interface (24) compatible with a telephone connection, characterised in that:
- the appearance of the said front surface is reproduced by software on the screen (28) of the computer provided with an element (36) for pointing on the screen (28) delivered to the apparatus by said connection, the computer being adapted to show, next to some of the said activation means, icons, display segments or blocks allowing regulation of the said activation means by pointing to them; and
- the control data are transmitted from the computer to the measuring apparatus by pointing at the representation of the key or button of the icon, segment or block, respectively, on the computer screen.

2. A method according to claim 1, characterised in that the visual display of the results of the said front surface are reproduced on the computer screen.

3. A method according to claim 1 or 2, characterised in that additional function keys are also reproduced on the computer screen.

4. A system for the remote control of a test or measuring apparatus having activatable and deactivatable means for measurement execution and, on a front surface, means for activating the execution means, means for visual display of the results and/or conditions of the measurement and an input/output interface (24) compatible with a telephone connection, the said system comprising a computer (18) comprising a screen (28) and provided with a modem (22), having a software system of control by pointing on the screen (28), so programmed as to generate, on its display screen (28), a representation of the front surface of the apparatus and causing the transmission, via the modem, of orders for controlling the elements of the apparatus designated by pointing on the computer screen (28), the computer being adapted to show, next to some of said activation means, icons, display segments or blocks allowing regulation of the said activation means by pointing to them.

5. A system according to claim 4, characterised in that the activation means in the form of encoding wheels are shown together with blocks each corresponding to one direction of rotation of the encoding wheel and, if required, each to a different advance increment of the encoding wheel.

6. A system according to claim 4 or 5, characterised in that the computer is adapted to show on its screen (28), in addition to the activation means belonging to the front surface of the apparatus, keys (40) for direct access to parameters and functions.

7. A system according to any one of claims 4 to 6, characterised in that the computer is adapted to show, on its screen, a key for switching between a local mode for controlling the apparatus and a remote control mode, by pointing at the key.

8. A system according to any one of claims 4 to 7, characterised in that the computer is adapted to the optional display on its screen (28) of all or part of the apparatus screen to an enlarged scale.

9. A system according to any one of claims 4 to 8, the computer comprising a mouse providing control by pointing on the screen, different functioning from the conventional functioning associated with a key pointed to on the screen being obtained by clicking the right-hand mouse button.
